# Europäisches Patentamt
## European Patent Office
## Office européen des brevets

(19)

(11) Publication number: **0 009 887**
**B1**

(12)

# EUROPEAN PATENT SPECIFICATION

(45) Date of publication of patent specification: **27.01.82**

(51) Int. Cl.³: **C 10 G 45/08, B 01 J 23/90**

(21) Application number: **79301809.4**

(22) Date of filing: **03.09.79**

(54) Process for regenerating spent hydrofining catalysts.

(30) Priority: **01.09.78 US 938796**
**01.09.78 US 938797**
**01.09.78 US 938798**

(43) Date of publication of application:
**16.04.80 Bulletin 80/8**

(45) Publication of the grant of the European patent:
**27.01.82 Bulletin 82/4**

(84) Designated Contracting States:
**BE DE FR GB IT NL**

(56) References cited:
**US - A - 2 547 380**
**US - A - 3 562 150**
**US - A - 4 014 815**

(73) Proprietor: **Exxon Research and Engineering Company**
**P.O.Box 390 200 Park Avenue**
**Florham Park New Jersey 07932 (US)**

(72) Inventor: **Silbernagel, Bernard George**
**1975 Mary Beth Court**
**Scotch Plains, New Jersey (US)**
Inventor: **Mohan, Raam Ramanuja**
**87 Ridgewood Place**
**Berkeley Heights New Jersey (US)**
Inventor: **Singhal, Gopal Hari**
**612 Ardsleigh Drive**
**Westfield, New Jersey (US)**

(74) Representative: **Field, Roger Norton et al,**
**Hanover Court 5 Hanover Square**
**London W1R OHQ (GB)**

Courier Press, Leamington Spa, England.

## Process for regenerating spent hydrofining catalysts

The present invention relates to a process for regenerating spent catalysts used in hydrofining operations, and more particularly, to a process for the regeneration of spent catalysts employed in hydrodesulfurization and hydrodenitrogenation by a process which includes treatment with a heteropoly acid.

In this specification, the Periodic Classification of the Elements is that devised by the Fisher Scientific Company, Catalogue No. 5—702—10 appearing in "The Condensed Chemical Dictionary". Edited by A. & E. Rose (Reinhold), 7th Edition. The abbreviation "HDS" represents hydrodesulfurization, and "GO-FINING" is a trade name for the hydrofining of heavier feedstocks such as gas oils.

As is well-known, hydrodesulfurization of, e.g., petroleum fractions, is usually carried out employing an alumina catalyst support impregnated with Group VIB and VIII metals such as molybdenum and cobalt. While such catalysts are extremely useful in reducing sulfur content, the effectiveness of these catalysts is diminished during the course of processing as a result of two problems. First, carbon residues (coke) deposit on the surface of the catalyst, thereby reducing the effective surface area and pore size of the catalytic activity. Second, heavy metals in the feedstock, such as nickel, and more importantly, vanadium, tend to poison the catalyst, again resulting in reduced catalytic activity. During the course of processing, the temperature is generally increased at a predetermined rate in order to compensate for the coking and poisoning effects. However, as the temperature is increased, a greater percentage of feedstock is cracked, thereby resulting in a decrease of desirable product. Further, the increase in processing temperature results in an increase in the deposition rate of carbon residues.

Regeneration of spent catalysts has been the subject of much investigation and, consequently, a number of approaches for regenerating hydrodesulfurization catalysts have been developed. In particular, acidic media, such as mineral acids, anhydrous HF, oxalic acid and other carboxylic acids and acidified amine solutions, and oxidizing media, such as hydrogen peroxide, have been employed. However, such methods either (1) result in removal of unacceptable amounts of catalytically active metals, e.g., cobalt and molybdenum, as well as some solubilization of the support material e.g., alumina, or (2) do not regenerate a sufficiently high degree of catalytic activity, so that catalytic activity of the regenerated catalyst is considerably inferior to that of fresh catalyst.

A sulfurous atmosphere at a pressure of at least 0.10 atmospheres and at a temperature of between 400° and 825°C has also been employed to regenerate the spent metal catalyst: see U.S. Patent 4,014,815, issued March 29, 1977. The process is employed for a time sufficient for the selective formation of sulfides of carbon and vanadium, which sulfides are characterized by having a high volatility and solubility in the sulfurous atmosphere and are selectively removed from the catalyst at the temperature of the process. While the disclosed process is useful in regeneration of spent catalysts, it requires and/or involves highly corrosive conditions and formation of very specific volatile sulfide species. The temperatures required for vanadium removal at acceptable rates may damage the catalyst support.

In accordance with the invention, spent catalyst which has been used in hydrofining of hydrocarbon feedstock is regenerated by contacting the spent catalyst with a solution of a heteropoly acid as defined below optionally containing up to 50 wt.% hydrogen peroxide, based on the concentration of the heteropoly acid, with prior optional contact of the catalyst with a gaseous sulfur-containing reagent having or providing a partial pressure of sulfur of at least about 0.01 atmospheres at a temperature of up to 650°C.

Heteropoly acids are defined by the following general formula $H_x(YM_{12}O_{40})$, where Y is at least one element from phosphorus, silicon, titanium, germanium, arsenic, zirconium, thorium and cerium; M is at least one element selected from molybdenum, tungsten, niobium and tantalum and x is 3 when Y is pentavalent (P, As) and x is 4 when Y is tetravalent (Si, Ti, Ge, Zr, Ce, Th). Up to one half of M may be replaced by at least one element selected from nickel, cobalt and vanadium. During recrystallization of a heteropoly acid, a hydrated species of the acid is usually obtained, as is well-known. The number of water molecules depends on the particular process of recrystallization of the heteropoly acid, and while typically ranging from about 5 to 50, is not critical. Examples of heteropoly acids useful in the practice of the invention include molybdophosphoric acid, $H_3(PMo_{12}O_{40})$, molybdosilicic acid, $H_4(SiMo_{12}O_{40})$, tungstosilicic acid, $H_4(SiW_{12}O_{40})$, and tungstophosphoric acid, $H_3(PW_{12}O_{40})$.

For Co—Mo/$Al_2O_3$ catalysts, a molybdenum-containing heteropoly acid is preferred, since it has been found that heteropoly acid treatment incorporates molybdenum in the $Al_2O_3$ support in a dispersed manner without phosphorus overloading. The addition of hydrogen peroxide to the heteropoly acid is found not to alter this result. An example of a heteropoly acid particularly useful in the practice of the invention is molybdophosphoric acid (MPA) having the general formula $H_3(PMo_{12}O_{40}) \cdot nH_2O$, for example, $H_3(PMo_{12}O_{40}) \cdot 36H_2O$.

The process results in the extraction of from 60 to 100% vanadium, at least 90% nickel and about 50% cobalt, with essentially no loss of molybdenum and aluminum (from the alumina support) and with preservation of the structural integrity of the support. Extraction of metals is accompanied by partial removal of sulfur and by substantial increase in pore volume and surface area.

Additional processing by doping the demetallized catalyst with cobalt or nickel followed by calcination markedly promotes carbon decoking, further sulfur removal and additional increase in surface area and pore volume. Hydrofining activity and product selectivity of the regenerated spent catalyst is substantially the same as that of fresh catalyst.

Regeneration of substantially complete catalytic activity in spent hydrodesulfurization catalysts is accomplished by contacting spent catalyst with a heteropoly acid under mild conditions of pH, temperature and agitation. Optionally, a solution of the heteropoly acid containing up to about 50 wt.% of hydrogen peroxide, based on the concentration of the acid, may be employed. Also optionally, the spent catalyst may be treated first with a gaseous sulfur-containing reagent.

The hydrodesulfurization catalysts which may be treated in accordance with the invention include those supported catalysts having Group VIB or VIII metals, including nickel, cobalt, tungsten and molybdenum and combinations of these. The metals may be in elemental, oxide or sulfide form or any combination thereof. The support may be any refractory oxide or other inert support, including alumina.

The spent catalyst may be pre-cleaned with an organic solvent to remove contaminating surface oils prior to or during treatment in accordance with the invention. The organic solvent can vary over a wide range of hydrocarbons comprising aliphatics, aromatics, cycloparaffins or mixtures of these, preferably boiling below about 250°C. Examples of suitable organic solvents include decane, benzene, toluene, xylene, cyclohexane, and tetralin. Cracked naphtha can also be used. The object of the solvent extraction process is to render the surface and the bulk of the catalyst more accessible to the heteropoly acid solution, and thereby effect efficient removal of the contaminating metals, e.g., vanadium and nickel.

The spent catalyst is optionally sulfided with a sulfur-containing reagent having a partial pressure of sulfur of at least about 0.01 atmospheres and preferably at least about 0.1 to 1 atmospheres at the processing temperature given below. An example of a suitable sulfur-containing reagent is $H_2S$, either pure or diluted to no less than about 15% by an active gas such as hydrogen or an inert gas such as nitrogen or argon.

The temperature of the sulfiding process may be carried out at any temperature from ambient up to about 650°C and preferably about 300° to 500°C. Most preferably, the temperature should be at least about 425°C for sesquisulfide ($V_2S_3$) formation. The sesquisulfide forms more rapidly than $VS_4$, which is formed at lower temperatures.

The time of the presulfiding process preferably ranges from about 1 to 4 hours, with shorter times being associated with higher temperatures. For example, presulfiding spent HDS catalyst in $H_2S$ (neat) for 4 hours at 500°C results in substantially complete conversion of vanadium species such as $VO^{2+}$, $VS_4$, $VO_xSO_y$ to vanadium sulfide.

The spent catalyst, whether presulfided or not, is contacted with a heteropoly acid under mild conditions of pH, temperature and agitation, employing any of the contacting processes usually used in petroleum processing, such as in a stationary phase or mildly agitated condition or in a plug flow reactor or any continuous moving concurrent or countercurrent liquid-solid bed reactor. The temperature of the process ranged between ambient to about 80°C and preferably about 30° to 60°C to maintain the stability and concentration of the heteropoly anion.

An aqueous solution of the heteropoly acid is employed. The concentration of heteropoly acid in aqueous solution preferably ranges from about 0.1 to 25 wt.% and more preferably about 0.2 to 6 wt%. The concentration of the heteropoly acid is chosen on the basis of the loading of the toxic metal contaminants, with higher concentrations being associated with higher concentrations of contaminants.

The pH of the solution ranges from about 1 to 3, and preferably about 1.5 to 2.5, to maintain the stability of the heteropoly acid in solution.

The spent catalyst is contacted with the heteropoly acid for about 4 to 200 hours and preferably about 10 to 50 hours, depending upon the amount of metals to be removed. The longer times are associated with higher concentrations of contaminants. In general, the reaction is substantially complete in about 10 to 24 hours, depending on the catalyst particulate size and the vanadium species present. The heteropoly acid may be optionally replaced with fresh solution at suitable intervals, such as about 10 hours, to accelerate removal of the contaminating metals.

An aqueous solution of a heteropoly acid with hydrogen peroxide is most preferably employed. The concentration of the hydrogen peroxide in the solution may range from about 1 to 50 wt.% and preferably 3 to 15 wt.% and most preferably about 15 wt.%, based on the amount of heteropoly acid. Conveniently, the volume ratio of heteropoly acid to hydrogen peroxide is about 100:1 v/v, employing prediluted hydrogen peroxide to form a solution having the final concentration given above. The concentrations of the heteropoly acid and hydrogen peroxide are chosen on the basis of the loading of the toxic metal contaminants, with higher concentrations being associated with higher concentrations of contaminants.

The use of hydrogen peroxide in conjunction with heteropoly acid is particularly efficacious in removing certain vanadium species which are largely un-affected by other processes. For example, the combination of molybdophosphoric acid and hydrogen peroxide results in the oxidation of compounds containing vanadyl species ($VO^{2+}$) by a factor of three times as compared with molybdophosphoric acid treatment alone. Such vanadyl species are generally formed on the catalyst during the course of the hydrodesulfurization process and their removal is important.

The presence of at least about 1 wt.% $H_2O_2$ may be necessary to achieve the effect, while greater than about 50 wt.% $H_2O_2$ provides little additional benefit. Without subscribing to any particular theory, it appears that the hydrogen peroxide provides several benefits. First, hydrogen peroxide apparently helps maintain the heteropoly acid in the highest oxidation state. Otherwise, vanadium species, in being oxidized from lower to higher states, would reduce the heteropoly acid, thus adversely affecting its extracting capabilities. Second, hydrogen peroxide apparently assists in oxidizing $V^{4+}$ to $V^{5+}$, $VO^{2+}$ to $V_2O_5$ and $V_2S_3$ to $VOSO_4$, all of which higher oxidation species are more soluble and hence more extractable by the heteropoly acid.

Use of the heteropoly acid/hydrogen peroxide solution also results in a significant increase in both rate and extent of carbon radical generation. While a three-fold increase in carbon radical density accompanies treatment with a heteropoly acid along, such as molybdophosphoric acid, addition of hydrogen peroxide leads to a higher carbon radical level at a faster rate. The increased carbon radical level apparently indicates breaking of the carbon "crust" on the catalyst surface, again facilitating extraction of contaminating metals.

The method disclosed above results in the extraction of about 60 to 100% vanadium, at least about 90% nickel and about 50% cobalt, together with substantial increase in both surface area and pore volume of the catalyst. The alumina-based support remains essentially unchanged. This process also results in molybdenum loading on the support in a well-dispersed manner without aggregation or cluster formation. Surprisingly, excess phosphorus loading is avoided by the process of the invention. Finally, the extraction of vanadium, nickel and cobalt results in a substantial reduction in sulfur build-up in the catalyst. While not subscribing to any particular theory, it appears that the reduction is due to removal of sulfur in the form of oxysulfides, oxysulfites or oxysulfates of the metals.

As described above, the process results in substantial removal of metals which tend to poison the catalyst, with consequent removal of other contaminants such as sulfur and concommitant regeneration of catalytic activity. However, it has also been found that one-time (1x) impregnation of the catalyst with a cobalt salt following treatment with the heteropoly acid, followed by calcination at modified temperatures of about 450°C or less in air, results in the substantial removal of carbon, as well as further removal of sulfur, together with a further increase in pore volume and surface area of the catalyst, and accordingly is preferred.

Cobalt impregnation may be accomplished using water soluble cobalt salts, preferably sulfur-free water soluble cobalt salts, such as cobalt nitrate and cobalt acetate. Impregnation may be done by the well-known technique of incipient wetness, adsorption from solution or evaporation of the salt onto the catalyst. Because of ease of operation, incipient wetness technique is preferred.

The calcination is carried out for about 2 to 15 hours, preferably about 3 to 6 hours, in an oxidizing atmosphere, such as air, in order to maintain support integrity and to facilitate coke removal. The cobalt salt is oxidized with cobalt oxide and carbon is oxidized to gaseous oxides of carbon. Moderate calcination temperatures reduce the risk of formation of localized hot spots, which would otherwise result in fracture of the catalyst support. However, higher temperatures may be employed by carefully employing the oxygen content of the atmosphere, as is well-known in the art. A second (2x) cobalt impregnation followed by a second calcination under the conditions given above result in essentially complete removal of carbon and sulfur from the catalyst, and accordingly is most preferred.

Analogous nickel salts may alternatively be employed to impregnate nickel in HDS catalysts such as $Ni\text{-}MO/Al_2O_3$.

Catalysts regenerated by molybdophosphoric acid in accordance with the foregoing process were tested for their hydrodesulfurization activity in a flow reactor at temperatures of 310°, 325° and 350°C; pressure of 3.1 MPa and liquid hourly space velocity (LHSV) of about 5.9 to 6.0. It was found that after the first cobalt impregnation and calcination, the catalyst exhibited about 75% HDS activity as compared to fresh commercial $Co\text{---}Mo/Al_2O_3$ catalyst. After the second cobalt impregnation and calcination, the HDS activity was nearly 105%, as compared with the fresh commercial catalyst. It is likely that by calcining for longer periods of time with a single cobalt impregnation, the hydrodesulfurization activity of the regenerated catalyst can be equally enhanced.

Metals such as nickel, cobalt, vanadium and the like solubilized by the heteropoly acid or heteropoly acid/hydrogen peroxide solution can be recovered by conventional solvent extraction, ion exchange or chelation technology. Metals so recovered can be used in the impregnation process (e.g., Co and $Co\text{---}Mo/Al_2O_3$ catalysts) or for the manufacture of fresh catalysts. In place of cobalt salts, nickel salts can also be used to aid in coke burning and to provide catalyst containing primarily $Ni\text{---}Mo/Al_2O_3$, which are suitable for hydrodenitrogenation reaction in addition to possessing HDS activity.

## EXAMPLES
### Example 1
Treatment of Spent Catalyst with Molybdophosphoric Acid.

Spent $Co\text{-}Mo/Al_2O_3$ catalysts, used for hydrodesulfurization of Cold Lake crude, was regenerated. The spent catalyst was small pore size, about 30 to 50 Å average, and loaded with 0.5 to 0.8% nickel and 5 to 8% vanadium. The spent catalyst was first pre-cleaned with benzene or toluene for 5 to 50 hours. Following this procedure, the catalyst was dried at 100°C under reduced pressure. The spent catalyst was the treated under the following conditions with molybdophosphoric acid (MPA):

A 50 g sample of the spent Co-Mo catalyst was contacted with 500 ml of a 0.4% freshly prepared aqueous solution of dodecamolybdophosphoric acid having the formula $H_3(PMo_{12}O_{40})\cdot24H_2O$ and a pH of 2.0 to 2.5. The flask was maintained at 40° to 60°C on a rotary shaker at a mixing rate of 150 rpm fro 90 to 120 hours. The rate of vanadium extraction was monitored by determining the vanadium content spectrophotometrically in filtered samples at intervals of 24 hours of incubation. The process was terminated when about 80% of the vanadium had been extracted from the catalyst. The percent elemental compositions of spent catalyst and catalyst regenerated by MPA treatment, 1x cobalt impregnation, 1x calcination (Runs 68, 71, 73 and 74) and 2x cobalt impregnation, 2x calcination (Run 76) are summarized in Table I.

Cobalt impregnation was done by incipient wetness technique, employing cobalt acetate; calcination was carried out at 450°C for 2 hours in air. Following treatment, 70 to 80% vanadium, 98% nickel and about 45% cobalt were extracted from the catalyst. There was no change in Mo or $Al_2O_3$ concentration. In all batches, the alumina support remained unchanged, as indicated by aluminum crystallite size (determined by X-ray diffraction pattern). The amount of sulfur and cat carbon reduction in samples treated with MPA alone and in samples 1x and 2x calcined after 1x and 2x cobalt impregnation, respectively, are summarized in Tables II and III, respectively. Sulfur was analyzed by method ASTM D—1552—64 and cat carbon by a modified version of method ASTM E 30—56 using a combustion tube of 30.5 cms length with inlet and outlet temperatures of 1100°C and a centre temperature of 1200°C. (The same analysis methods were employed for other examples). The hydrodesulfurization activity of fresh catalyst, spent catalyst and spent catalyst regenerated by MPA treatment followed by 1x cobalt impregnation and 1x calcination (Runs 68, 71, 73 and 74) and 2x cobalt impregnation and 2x calcination (Run 76) are summarized in Table IV. Catalyst activity was determined by conversion of dibenzothiophene (DBT) to biphenyl, hydrogenated biphenyl and $H_2S$. For Runs 68, 71, 73 and 74, the HDS activity of the regenerated catalyst approached that of the fresh catalyst at temperatures of 310°, 325° and 350°C. For Run 76, the HDS activity at these temperatures was at least 3% greater than that of the fresh catalyst. The increase in surface area (m²/g) and pore volume (cm³/g) of spent catalyst compared with regenerated catalyst after (1) MPA treatment alone; (2) MPA treatment followed by 1x cobalt impregnation 1x calcination; and (3) MPA treatment followed by 2x cobalt impregnation, 2x calcination, are summarized in Table V.

TABLE I

PERCENT ELEMENTAL COMPOSITION OF SPENT AND MOLYBDOPHOSPHORIC ACID (MPA) TREATED SPENT $Co-Mo/Al_2O_3$ CATALYST

| Sample | Cat Carbon | (1) $SO_4$-S | (2) CoO | (2) $MoO_3$ | (2) $V_2O5$ | (2) NiO | (3) $Al_2O_3$ | % Total |
|---|---|---|---|---|---|---|---|---|
| Spent catalyst | 11.20 | 9.34 | 3.45 | 8.25 | 11.50 | 0.77 | 54.00 | 98.54 |
| Run 68 (4) | 8.20 | 4.88 | 1.34 | 20.58 | 4.50 | — | 56.00 | 95.52 |
| Run 68 (4, 5) | 3.06 | 1.92 | 2.91 | 19.40 | 4.17 | — | 68.00 | 99.46 |
| Run 71 (4) | 8.20 | 4.88 | 1.35 | 17.94 | 5.75 | — | 56.00 | 94.12 |
| Run 71 (4,5) | 0.39 | 1.89 | 2.98 | 23.74 | 6.44 | — | 68.00 | 104.94 |
| Run 73 (4) | 8.20 | 4.88 | 1.34 | 19.06 | 5.01 | — | 56.00 | 94.51 |
| Run 73 (4, 5) | 1.58 | 1.92 | 3.15 | 20.55 | 5.76 | — | 68.00 | 100.96 |
| Run 74 (4) | 8.40 | 2.52 | 1.26 | 19.06 | 4.56 | — | 58.00 | 94.00 |
| Run 74 (4, 5, 6) (ave.) | 0.23 | 1.29 | 6.16 | 24.52 | 4.74 | — | 67.00 | 103.94 |
| Run 76 (4) | 8.60 | 1.82 | 1.70 | 22.60 | 2.88 | — | 56.00 | 93.64 |
| Run 76 (4, 5) | 3.64 | 0.72 | 2.50 | 27.90 | 2.91 | — | 68.00 | 105.51 |
| Run 76 (4—7) (ave.) | 0.46 | 0.66 | 5.20 | 28.50 | 3.60 | — | 68.70 | 107.72 |

(1) Assumed 50% total sulfur as sulfate.
(2) By X-ray fluorescence spectrophotometry.
(3) According to a modified version of method no. ASTM E—120.
(4) MPA treated.
(5) MPA treated 1x cobalt impregnated (cobalt content 2—4%) and 1x calcined.
(6) MPA treated 1x cobalt impregnated (cobalt content 4.80%) and 1x calcined.
(7) MPA treated 2x cobalt impregnated (cobalt content 4—5%) and 2x calcined.

TABLE II

PERCENT SULFUR REMOVED FROM MOLYBDOPHOSPHORIC ACID (MPA)
TREATED SPENT Co-Mo/$Al_2O_3$ CATALYST

| Sample | Initial Sulfur | After MPA Treatment | % Reduction | Residual Sulfur After 1x Cobalt Impregnation & 1x Calcination | % Reduction | Residual Sulfur After 2x Cobalt Impregnation & 2x Calcination | % Reduction |
|---|---|---|---|---|---|---|---|
| Spent catalyst | 6.25 | — | 0 | — | — | — | — |
| Spent catalyst | 6.25 | — | — | 4.05 | 36.0 | — | — |
| Run 68 | 6.25 | 3.25 | 48 | 1.29 | 80.0 | — | — |
| Run 71 | 6.25 | 3.25 | 48 | 1.66 | 74.0 | — | — |
| Run 73 | 6.25 | 3.25 | 48 | 1.29 | 80.0 | — | — |
| Run 74 | 4.17 | 1.69 | 59 | 0.86 | 80.0 | — | — |
| Run 76 | 4.17 | 1.27 | 70 | 0.49 | 88.0 | 0.44 | 90.0 |

TABLE III

EFFECT OF TYPE OF MIXING AND COBALT DOPING ON CAT-CARBON REMOVAL
FROM SPENT AND MOLYDOPHOSPHORIC ACID (MPA) TREATED
Co-Mo/Al$_2$O$_3$ CATALYST

| Sample | Initial % Cat Carbon | Treatment | Residual % Cat Carbon | % Cat Carbon Removed |
|---|---|---|---|---|
| Spent catalyst | 11.20 | None | — | 0 |
| Spent catalyst | 11.20 | Calcined | 7.4 | 33 |
| Spent catalyst | 11.20 | 1x Co Impregnated and 1x Calcined | 3.06 | 73 |
| Run 68 (1) | 11.20 | MPA Treated | 8.20 | 27 |
| Run 68 (1) | 11.20 | MPA Treated, 1x Co Impregnated and 1x Calcined | 3.10 | 72 |
| Run 71 (2) | 11.20 | MPA Treated, 1x Co Impregnated and 1x Calcined | 0.39 | 99 |
| Run 73 (1) | 11.20 | MPA Treated, 1x Co Impregnated and 1x Calcined | 1.58 | 87 |
| Run 74 (2) | 11.80 | MPA Treated, 1x Co Impregnated and 1x Calcined | 0.23 | 98 |
| Run 76 (1) | 11.80 | MPA Treated, 1x Co Impregnated and 1x Calcined | 3.71 | 69 |
| Run 76 (1) | 11.80 | MPA Treated, 2x Co Impregnated and 2x Calcined | 0.45 | 96 |

(1) Mixing by shaking;
(2) Mixing in concurrently moving liquid-solid bed.


TABLE IV

HYDRODESULFURIZATION ACTIVITY OF FRESH, SPENT AND
MOLYBDOPHOSPHORIC (MPA) TREATED Co-Mo/Al$_2$O$_3$ CATALYST

| Sample | Mole Percent DBT Conversion | | |
|---|---|---|---|
| | 310°C. | 325°C. | 350°C. |
| Fresh catalyst (commercial) | 49 | 77 | 95 |
| Spent catalyst (1, 3) | 10 | 23 | 44 |
| Run 68 (2, 3) | 44 | 65 | 91 |
| Run 72 (2, 4) | 29 | 55 | 82 |
| Run 73 (2, 3) | 31 | 55 | 81 |
| Run 74 (2, 4, 5) (ave.) | 31 | 55 | 81 |
| Average of Runs 68, 72, 73 & 74 | 34 | 58 | 85 |
| % Activity of fresh catalyst | 69 | 76 | 89 |
| Run 76 (3, 6) | 54 | 84 (7) | 98 |
| % Activity of fresh catalyst | 110 | 110 | 103 |

(1) Solvent extracted, 1x Co impregnated and 1x calcined.
(2) MPA treated, 1x Co impregnated and 1x calcined. Cobalt content 2—47.
(3) Mixing by shaking.
(4) Mixing in concurrently moving liquid-solid bed.
(5) Cobalt content 4.807.
(6) MPA treated, 2x Co impregnated and 2x calcined. Cobalt content 4—5%.
(7) Estimated by extrapolation of 310° and 350°C data

TABLE V

SURFACE AREA (SA) AND PORE VOLUME (PV) OF SPENT AND
MOLYBDOPHOSPHORIC ACID (MPA) TREATED Co-Mo/Al$_2$O$_3$ CATALYST

| Sample | Initial | | After MPA Treatment | | After 1x Impregnation & 1x Calcination | | After 2x Impregnation & 2x Calcination | |
|---|---|---|---|---|---|---|---|---|
| | S.A. m$^2$/g | P.V cm$^3$/g | S.A. m$^2$/g | P.V. cm$^3$/g | S.A. m$^2$/g | P.V. cm$^3$/g | S.A. m$^2$/g | P.V. cm$^3$/g |
| Spent catalyst | 136 | 0.24 | — | — | — | — | — | — |
| Run 68 | 136 | 0.24 | 201 | 0.34 | 227 | 0.43 | — | — |
| Run 71 | 136 | 0.24 | 200 | 0.31 | 204 | 0.36 | — | — |
| Run 73 | 136 | 0.24 | 196 | 0.35 | 222 | 0.43 | — | — |
| Run 74 | 166 | 0.27 | 233 | 0.43 | 239 | 0.49 | — | — |
| Run 76 | 131 | 0.25 | 211 | 0.36 | 291 | 0.52 | 275 | 0.59 |

## Example 2

### Treatment of Spent Catalyst with Molybdophosphoric Acid

Spent Co—Mo/Al$_2$O$_3$ catalyst, used for hydrodesulfurization of Cold Lake crude, was regenerated. The spent catalyst was large pore size, about 100 to 150 Å average, and highly loaded with metals (6% nickel and 18% vanadium). The spent catalyst was first pre-cleaned with toluene for 48 hours. Following this procedure, the catalyst was dried at 100°C under reduced pressure. The spent catalyst was then treated under the following conditions with molybdophosphoric acid (MPA):

A 20 g sample of the solvent-extracted, spent Co—Mo catalyst was suspended in 1000 ml of 0.4% freshly prepared aqueous solution of dodecamolybdophosphoric acid of the formula H$_3$(PMo$_{12}$O$_{40}$)·24H$_2$O at a pH of 2.0 to 2.5. The system was maintained at 40° to 60°C on a rotary shaker at a mixing rate of 100 to 120 rpm. Samples at various intervals were withdrawn and clarified by sedimentation. The clarified fluids were monitored by atomic absorption spectroscopy for the determination of vanadium and nickel concentrations. The present elemental compositions of spent catalyst and catalyst regenerated by MPA treatment, and 2x cobalt impregnation and 2x calcination are presented in Table VI. After 90 to 120 hours, 70 to 80% vanadium, 93% nickel, and about 40% cobalt were extracted from the catalyst. There was no change in Mo or Al$_2$O$_3$ concentration. Cobalt impregnation was done by incipient wetness technique, employing cobalt nitrate; calcination was carried out at 400°C for 2 hours in air. The percent sulfur and cat carbon removed after 2x cobalt impregnation and 2x calcination are presented in Tables VII and VIII, respectively. The demetallized, 2x cobalt impregnated and 2x calcined material exhibited 84, 86 and 99% hydrodesulfurization activity of a fresh small pore, low metals loaded Co—Mo catalyst at temperatures of 310°, 325° and 350°C, respectively, as shown in Table IX.

The increase in surface area (m$^2$/g) and pore volume (cm$^3$/g) of spent catalyst compared with regenerated catalyst after MPA treatment followed by 2x cobalt impregnation, 2x calcination are summarized in Table X.

The low surface area and pore volume values indicated for Run 81 are attributed to an increase in pellet density due to heavy carbon and metals loading and high attribution of the catalyst under process conditions. The low pore volume obtained after MPA treatment cobalt impregnation and calcination is probably due to loading the pores by MPA and cobalt. It should be noted that calcining the catalyst after cobalt impregnation increased the surface area by 36%.

## TABLE VI

### PERCENT ELEMENTAL COMPOSITION OF SPENT AND MOLYBDOPHOSPHORIC ACID (MPA) TREATED SPENT Co-Mo/Al$_2$O$_3$ CATALYST

| Sample | Cat Carbon | (1) SO$_4$-S | (2) CoO | (2) MoO$_3$ | (2) V$_2$O$_5$ | (2) NiO | (3) Al$_2$O$_3$ | % Total |
|---|---|---|---|---|---|---|---|---|
| Spent catalyst | 20.16 | 19.28 | 1.14 | 5.70 | 38.36 | 6.45 | 21.72 | 112.81 |
| Run 81 (4) | 0.54 | 1.15 | 7.12 | 51.0 | 8.03 | 0.16 | 50.11 | 118.11 |

(1) Assumed 50% total sulfur as sulfate.
(2) By X-ray fluorescence spectrophotometry.
(3) According to the modified method No. ASTM—E120.
(4) MPA treated, 2x cobalt impregnated (cobalt content 4—5%) and 2x calcined.

## TABLE VII

### PERCENT SULFUR REMOVED FROM MOLYBDOPHOSPHORIC ACID (MPA) TREATED SPENT Co-Mo/Al$_2$O$_3$ CATALYST

| Sample | Initial Sulfur | After MPA Treatment | % Reduction | Residual Sulfur After 2x Cobalt Impregnation and 2x Calcination | % Reduction |
|---|---|---|---|---|---|
| Spent catalyst | 6.25 | — | 0 | — | — |
| Run 81 | 19.28 | 14.70 | 24 | 1.15 | 94 |

## TABLE VIII

### EFFECT OF TYPE OF MIXING AND COBALT DORING ON CAT-CARBON REMOVAL FROM SPENT AND MOLBDOPHOSPHORIC ACID (MPA) TREATED Co-Mo/Al$_2$O$_3$ CATALYST

| Sample | Initial % Cat Carbon | Treatment | Residual % Cat Carbon | % Cat Carbon Removed |
|---|---|---|---|---|
| Spent catalyst | 20.16 | None | — | 0 |
| Run 81 (1) | 20.16 | MPA Treated, 2x Co Impregnated and 2x Calcined (1) | 0.54 | 97 |

(1) Mixing rate 100 rpm.

**0 009 887**

TABLE IX

HYDRODESULFURIZATION ACTIVITY OF FRESH, SPENT AND
MOLYBDOPHOSPHORIC ACID (MPA) TREATED Co-Mo/Al$_2$O$_3$ CATALYST

| | Mole Percent DBT Conversion | | |
|---|---|---|---|
| Sample | 310°C | 325°C | 350°C |
| Fresh catalyst (commercial) | 49 | 77 | 95 |
| Run 81 (1, 2) | 41 | 66 | 94 |
| % Activity of Fresh Catalyst | 84 | 86 | 99 |

(1) Mixing by shaking at 100 rpm.
(2) MPA treated, 2x Co impregnated and 2x calcined.
Cobalt content 4—5%.

TABLE X

SURFACE AREA (SA) AND PORE VOLUME (PV) OF SPENT AND
MOLYBDOPHOSPHORIC ACID (MPA) TREATED Co-Mo/Al$_2$O$_3$ CATALYST

| | Initial | | After 2x Impregnation and 2x Calcination | |
|---|---|---|---|---|
| Sample | S.A. m$^2$/g | P.V. cm$^3$/g | S.A. m$^2$/g | P.V. cm$^3$/g |
| Run 81 | 87 | 0.12 | 118 | 0.07 |

Example 3
Treatment of Spent Catalysts with Heteropoly Acids

The following heteropoly acids were investigated for their ability to extract vanadium and nickel deposited on Co—Mo HDS catalyst during process conditions:

Four 1 g samples of solvent-cleaned, small pore size, spent Co—Mo HDS catalyst (as in Example 1) were placed in a 300 ml Erlenmeyer flask. To each flask was added 100 ml of a 0.4 g wt.% aqueous solution of the following heteropoly acids: dodecamolybdophosphoric acid, H$_3$(PMo$_{12}$O$_{40}$)·24H$_2$O, dodecamolybdosilicic acid, H$_4$(SiMo$_{12}$O$_{40}$(·24H$_2$O, dodecatungstophosphoric acid, H$_3$(PW$_{12}$O$_{40}$)·24H$_2$O, and dodecatungstosilicic acid, H$_4$(SiW$_{12}$O$_{40}$)·24H$_2$O. The flasks containing the catalyst and the heteropoly acid were maintained at 60°C on a rotary shaker at a mixing rate of 100 rpm. At the end of 24 hours, the extracts were separated from the catalysts by decantation and passed through 0.2 $\mu$m size Millipore filters. The catalysts were resuspended in 100 ml quantities of fresh heteropoly acids and the flasks were maintained for an additional 24 hours under the same conditions described above. At the end of the second 24-hour period, the extracts were separated from the catalysts by decantation and the catalysts were washed thoroughly with deionized distilled water and dried at 100°C for 48 hours. The dried catalysts were stored under nitrogen until subsequent analysis. The second 24-hour period extracts were treated in the same manner as the first extracts. The pH values of the first and second 24-hour extracts were determined. The pH changes are summarized in Table XI. Vanadium, nickel, cobalt, molybdenum and aluminum concentrations in each of the filtered extracts were determined by atomic absorption spectroscopy. The percent metals extracted by each of the heteropoly acids from the spent Co—Mo HDS catalyst are summarized in Table XII.

12

## TABLE XI

### pH CHANGES DURING FIRST AND SECOND 24 HOUR PERIOD OF HETEROPOLY ACID EXTRACTS OF SPENT Co-Mo HDS CATALYST

| Heteropoly Acid | Initial pH | pH at end of 1st 24 hr. extraction | Initial pH fresh acid | pH at end of 2nd 24 hr. extraction |
|---|---|---|---|---|
| $H_3(PMo_{12}O_{40}).24H_2O$ | 2.32 | 2.92 | 2.32 | 2.78 |
| $H_4(SiMo_{12}O_{40}).24H_2O$ | 2.20 | 3.20 | 2.20 | 2.86 |
| $H_3(PW_{12}O_{40}).24H_2O$ | 2.30 | 3.30 | 2.30 | 3.16 |
| $H_4(SiW_{12}O_{40}).24H_2O$ | 2.40 | 3.40 | 2.40 | 3.22 |

## TABLE XII

### PERCENT METALS EXTRACTED BY HETEROPOLY ACID AFTER 48 HOURS FROM SPENT Co-Mo HDS CATALYST

| Heteropoly Acid | V | Ni | Co | Mo | Al |
|---|---|---|---|---|---|
| $H_3(PMo_{12}O_{40}).24H_2O$ | 80 | 80 | 40 | 0 | 0 |
| $H_4(SiMo_{12}O_{40}).24H_2O$ | 89 | 90 | 50 | 0 | 0 |
| $H_3(PW_{12}O_{40}).24H_2O$ | 63 | 90 | 50 | 0 | 0 |
| $H_4(SiW_{12}O_{40}).24H_2O$ | 66 | 95 | 60 | 0 | 0 |

### Example 4

Results of Heteropoly Acid Treatment

The surface area and pore volume of spent and treated catalysts (small pore) were determined as a function of heteropoly acid treatment. The results are given in Table XIII, below.

## TABLE XIII

### SURFACE AREA AND PORE VOLUME OF SOLVENT-EXTRACTED SPENT CATALYST, FOLLOWED BY HETEROPOLY ACID EXTRACTION

| Heteropoly Acid Treatment | Surface Area $m^2/g$ | Pore Volume $cm^3/g$ |
|---|---|---|
| Spent catalyst | 166 | 0.212 |
| $H_3(PMo_{12}O_{40}).24H_2O$ | 220 | 0.313 |
| $H_4(SiMo_{12}O_{40}).24H_2O$ | 223 | 0.350 |
| $H_3(PW_{12}O_{40}).24H_2O$ | 199 | 0.299 |
| $H_4(SiW_{12}O_{40}).24H_2O$ | 217 | 0.306 |
| Fresh catalyst | 265 | 0.50 |

Table XIII clearly demonstrates that upon treatment with a heteropoly acid, both surface area and pore volume increases significantly.

### Example 5

Hydrogen Peroxide Enchancement of Carbon Radical Generation

Samples of small pore Co—Mo/$Al_2O_3$ spent hydrotreating catalyst from the Amuay refinery used for hydrodesulfurization in Exxon's GO-FINING process were subjected to treatments of varying duration with dodecamolybdophosphoric acid (MPA) and with or without added hydrogen peroxide.

# 0 009 887

When added, the amount of peroxide employed was 3 wt.% of the total MPA present. An aqueous solution of MPA (0.4 wt.%) of pH 2.3 was employed. The carbon radical density per unit volume of catalyst was determined by paramagnetic resonance observations. Table XIV below set forth the relative carbon radical density, with the starting material assigned a value of unity.

TABLE XIV

RELATIVE CARBON RADICAL DENSITY

| MPA | | MPA + 3 wt. % $H_2O_2$ | |
|---|---|---|---|
| Time (hrs) | Radical Density (relative units) | Time (hrs) | Radical Density (relative units) |
| 0 | 1.0 | 0 | 1.0 |
| 4 | 4.8 | 2 | 7.2 |
| 20 | 6.0 | 4 | 10.0 |
| 28 | 5.4 | 6 | 9.8 |
| 50 | 7.5 | 20 | 16.3 |
| 72 | 6.6 | 28 | 18.4 |

Clearly, use of hydrogen peroxide in conjunction with the heteropoly acid increased the carbon radical density. While not subscribing to any particular theory, the increased carbon radical density suggests that the carbon "crust" on the catalyst surface is more readily broken in the presence of the peroxide, thereby facilitating more rapid extraction of contaminating metals by the heteropoly acid.

Example 6

Metals Removal Improved by Hydrogen Peroxide Addition

Magnetic resonance techniques were used to monitor levels of different vanadium species on spent hydrotreating catalysts. As shown in Table XV below, $V_2S_3$ species were very readily extracted by treatment with MPA alone. Other species, such as the surface species and $VO^{2+}$ associated with $Al_2O_3$, were much less tractable. After treatment in the aqueous solution of heteropoly acid plus 3 wt.% $H_2O_2$ of Example 5, however, the concentration of the surface species was reduced to a small fraction of its total value and the concentration of the $VO^{2+}$ species was also appreciably reduced. It should be noted that the reduction in surface species and $VO^{2+}$ species occurred in a much shorter time employing the heteropoly acid/hydrogen peroxide solution, as compared to heteropoly acid solution alone.

TABLE XV

AMOUNT OF VANADIUM REMOVED

| | Vanadium Type | | |
|---|---|---|---|
| | Vanadium Sulfide | Surface Species | $VO^{2+}$ Species |
| Spent Large Pore Catalyst, Residuum Feed: | | | |
| —Before MPA Treatment | 7 wt. % | 5 wt. % | 1 wt. % |
| —After MPA Treatment (90 hrs) | <0.5 wt. % | 3 wt. % | 1 wt. % |
| Spent Small Pore Catalyst, GO-FINING Feed | | | |
| —Before MPA+$H_2O_2$ Treatment | — | 5 wt. % | 1 wt. % |
| —After MPA+$H_2O_2$ Treatment (26 hrs.) | — | <1 wt. % | 0.4 wt. % |

14

Example 7

Reduction of $VO^{2+}$ Species with Hydrogen Peroxide Addition

The $VO^{2+}$ species was found to be unaffected by treatment with aqueous solution containing MPA alone. Upon addition of 3 wt.% $H_2O_2$ (based on MPA), the following extraction kinetics were observed, demonstrating significant extraction of $VO^{2+}$ within about 20 hours. The anomalous result after six hours was found to be reproducible; no satisfactory explanation is known.

TABLE XVI

REDUCTION OF $VO^{2+}$

| Time, hrs. | Relative $VO^{2+}$ Intensity |
|:---:|:---:|
| 0 | 84 |
| 2 | 78 |
| 4 | 74 |
| 6 | 108 |
| 20 | 38 |
| 26 | 45 |

Example 8

Effect of Catalyst Size on Vanadium Extraction

A sample of solvent-extracted, spent Co—Mo/$Al_2O_3$ catalyst was used to determine the effect of size on vanadium extraction with the heteropoly acid, molybdophosphoric acid (MPA). The vanadium extraction was determined employing (a) 1/16 inch extrudate and (b) 125 to 150 $\mu$m size powder with aqueous solutions of MPA alone and MPA + 15 wt.% $H_2O_2$ 100:1 v/v. The amount of MPA in aqueous solution was 0.4 wt.%; the pH was 2.3. The extraction rates were determined in a continuous plug flow reactor maintained at 60°C with a flow rate of 1 ml/min. Samples were collected at suitable intervals. The vanadium extracted was determined by atomic absorption spectrophotometry. The data on the percent vanadium extracted are summarized in Table XVII below.

TABLE XVII

PERCENT VANADIUM EXTRACTED

| Catalyst Size | Treatment | Extraction Time, hours | | | | | | |
|---|---|:---:|:---:|:---:|:---:|:---:|:---:|:---:|
| | | 2 | 4 | 6 | 8 | 10 | 12 | 15 |
| 1/16 pellet | MPA | 5 | 10 | 15 | 18 | 23 | 26 | 30 |
| 1/16 pellet | MPA + $H_2O_2$ | 15 | 30 | 41 | 51 | 57 | 62 | 66 |
| 125—150 $\mu$m | MPA | 10 | 16 | 21 | 25 | 29 | 33 | 38 |
| 125—150 $\mu$m | MPA + $H_2O_2$ | 23 | 36 | 44 | 55 | 62 | 70 | 81 |

It is clear from Table XVII that (1) MPA supplemented with hydrogen peroxide is much more effective in vanadium removal than MPA alone and (2) crushing the catalyst further increases the rate of vanadium removal.

Example 9

Effect of Hydrogen Peroxide Concentration on Rate of Vanadium Extraction.

Toluene-extracted spent Co-Mo/$Al_2O_3$ catalyst was contacted with an aqueous solution of a heteropoly acid (MPA) alone and MPA supplemented with various concentrations of $H_2O_2$ in a continuous plug flow reactor maintained at 60°C and a flow rate of 1 ml/min. The amount of MPA in aqueous solution was 0.4 wt.%; the ratio of MPA: peroxide was 100:1 v/v. Samples were collected at suitable intervals and vanadium concentration was determined by atomic absorption spectrophotometry. The data on the rate of vanadium extracted are summarized in Table XVIII.

15

TABLE XVIII

RATE OF VANADIUM EXTRACTED, $\mu$g/ml/min.

| Treatment | Extraction Time, hours | | | | | | | |
|---|---|---|---|---|---|---|---|---|
| | 2 | 4 | 6 | 8 | 12 | 16 | 20 | 24 |
| MPA | 42 | 46 | 54 | 58 | 68 | 76 | 86 | 84 |
| MPA + 3% $H_2O_2$ | 50 | 60 | 70 | 78 | 100 | 120 | 142 | 140 |
| MPA + 15% $H_2O_2$ | 55 | 60 | 90 | 100 | 100 | 146 | 180 | 200 |
| MPA + 30% $H_2O_2$ | 60 | 75 | 80 | 120 | 180 | 204 | 220 | 240 |

The data in Table XVIII demonstrate that addition of hydrogen peroxide to the heteropoly acid enhances both the rate and amount of vanadium removal.

Example 10

Effects of Hydrogen Peroxide Concentration on Percent of Vanadium Extracted

The experiment given in Example 9 was repeated, utilizing different concentrations of hydrogen peroxide with MPA. The data on the percent vanadium extracted are summarized in Table XIX below.

TABLE XIX

PERCENT VANADIUM EXTRACTED

| Treatment | Extraction Time, hours | | | | |
|---|---|---|---|---|---|
| | 1 | 2 | 4 | 20 | 24 |
| . MPA | 2 | 4 | 7.5 | 33 | 38 |
| MPA + 3% $H_2O_2$ | 5 | 10 | 16 | 44 | 49 |
| MPA + 9% $H_2O_2$ | 7 | 12 | 22 | 59 | 63 |
| MPA + 15% $H_2O_2$ | 10 | 23 | 43 | 73 | 80 |

Again, it is clear that addition of hydrogen peroxide to the heteropoly acid is much more effective in vanadium removal.

Example 11

Effect of Temperature on Rate of Vanadium Extraction

Toluene-extracted spent Co—Mo/Al$_2$O$_3$ hydrodesulfurization catalyst was contacted with an aqueous solution of a heteropoly acid (MPA, 0.4 wt.%) supplemented with 3 wt.% $H_2O_2$ 100:1 v/v. The rate of extraction of vanadium in a continuous plug flow reactor at a flow rate of 1 ml/min was determined at 50°, 60° and 70°C. Eluates were collected at suitable intervals and vanadium concentration in each fraction was determined by atomic absorption spectrophotometry. The influence of temperature on the rate of vanadium extraction is summarized in Table XX, below.

TABLE XX

RATE OF VANADIUM EXTRACTED, $\mu$g/ml/min

| Temperature °C | Extraction Time, hours | | | | | | | | | | |
|---|---|---|---|---|---|---|---|---|---|---|---|
| | 2 | 4 | 6 | 8 | 10 | 12 | 14 | 16 | 18 | 20 | 24 |
| 50 | 17 | 20 | 32 | 37 | 40 | 44 | 46 | 48 | 50 | 50 | 50 |
| 60 | 104 | 132 | 150 | 144 | 132 | 114 | 102 | 92 | 87 | 80 | 76 |
| 70 | 150 | 182 | 202 | 200 | 188 | 180 | 172 | 164 | 154 | 144 | 128 |

From Table XX, it is clear that the increase in temperature facilitates the vanadium removal. However, at temperatures much higher than about 70°C, evaporation of solvent water also becomes significant. Therefore, temperatures much above 80°C should be avoided.

Example 12

Conversion of the Surface Vanadium Species to Vanadium Sulfide.

Samples of small pore Co—Mo/Al$_2$O$_3$ spent hydrotreating catalyst from the Amuay refiner used for hydrodesulfurization in Exxon's GO-FINING process were subjected to treatments of varying temperatures and duration with substantially pure H$_2$S gas at 1 atm. The results are tabulated in Table XXI below.

TABLE XXI

|  | Temperature | Time | % V$_2$S$_3$ (Approx.) |
|---|---|---|---|
| Spent catalyst | — | — | 0 |
| H$_2$S Treatments: | 400°C | 4 hr. | 50 |
|  | 500°C | 4 hr. | 80 |
|  | 500°C | 1 hr. | 40 |
|  | 600°C | 1 hr. | 65 |

The results show that a substantial portion of the surface vanadium species is converted to V$_2$S$_3$. This species is readily extractable with a heteropoly acid such as dodecamolybdophosphoric acid (MPA).

Example 13

Effect of Presulfiding on Vanadium Extraction.

Solvent-extracted spent Co—Mo/Al$_2$O$_3$ was presulfided with a stream of 100% H$_2$S (1 atm)) at a flow rate of 10 liter/hr. at 500°C for four hours. The temperature was slowly raised from 30° to 90°C in 0.5 hr, from 90° to 500°C in 1 hour and held at 500°C for 4 hours. After presulfiding, the catalyst was cooled to room temperature with a stream of O$_2$-free, dry nitrogen. The presulfided, spent catalyst was stored under nitrogen atmosphere until further use.

The vanadium extraction with a heteropoly acid, molybdophosphoric acid (MPA), from a presulfided 1/16 inch extrudate was carried out in a continuous plug flow reactor at a flow rate of 1 ml/min and at a temperature of 60°C. Aqueous solutions of MPA alone and MPA + 15 wt.% H$_2$O$_2$ 100:1 v/v were employed. The amount of MPA was 0.4 wt.%; the pH was 2.3. Samples were collected at suitable intervals and vanadium concentration was determined with atomic absorption spectrophotometry. The data on the percent vanadium extracted at various intervals are summarized in Table XXII below.

TABLE XXII

PERCENT OF VANADIUM EXTRACTED

| Treatment | Extraction Time, hrs. | | | | | | |
|---|---|---|---|---|---|---|---|
|  | 5 | 10 | 15 | 20 | 30 | 40 | 50 |
| MPA | 9 | 18 | 26 | 33 | 44 | 54 | 62 |
| Presulfided+MPA | 20 | 28 | 35 | 43 | 56 | 68 | 78 |
| MPA + H$_2$O$_2$ | 42 | 53 | 60 | 64 | 72 | 77 | 83 |
| Presulfided+MPA + H$_2$O$_2$ | 45 | 54 | 62 | 70 | 82 | 90 | 97 |

From Table XXII, it is clear that incorporation of the presulfiding step is highly beneficial to the vanadium extraction. Combining presulfiding with the heteropoly acid/hydrogen peroxide extraction results in almost complete removal of vanadium.

Example 14

Effect of Presulfiding Temperature on Vanadium Extraction

Two samples of solvent-extracted, 1/16 inch extrudates of spent Co—Mo/Al$_2$O$_3$ catalyst were presulfided at 400°C and at 500°C for 4 hours in a 100% H$_2$S stream. The extraction with heteropoly acid (MPA) alone and supplemented with 15 wt.% H$_2$O$_2$ (as in Example 3) was carried out in a continuous plug flow reactor at 60°C with a flow rate of 1 ml/min. Samples were collected at suitable intervals and analyzed for vanadium with atomic absorption spectrophotometry. The data on the percent vanadium extracted are summarized in Table XXIII below.

TABLE XXIII

PERCENT VANADIUM EXTRACTED

| Treatment | | Extraction Time, hrs. | | | | | | | | | |
|---|---|---|---|---|---|---|---|---|---|---|---|
| Presulfide | Extraction | 2 | 4 | 5 | 7 | 10 | 15 | 18 | 20 | 26 | 30 |
| — | MPA | — | — | 9 | — | 18 | 26 | — | 33 | — | 44 |
| 400°C, 4 hrs | MPA | 4 | 11 | — | 16 | 21 | 30 | 33 | — | 42 | — |
| — | MPA + H$_2$O$_2$ | — | — | 42 | — | 53 | 60 | — | 64 | — | 72 |
| 400°C, 4 hrs | MPA + H$_2$O$_2$ | 12 | 21 | — | 40 | 48 | 58 | 63 | — | 76 | — |
| 500°C, 4 hrs | MPA + H$_2$O$_2$ | 12 | 23 | — | 40 | 53 | 72 | 80 | — | 92 | — |

Again, it is clear the presulfiding, particularly at high temperatures, increases both the rate and extent of vanadium removal.

Example 15

Effect of Catalyst Particulate Size on Vanadium Extraction.

The experiment given in Example 14 was repeated, except that the catalyst was crushed to give 20 to 40 mesh size particles. Presulfiding was carried out at 500°C for 4 hours. Extraction was with MPA and 15 wt.% H$_2$O$_2$ 100:1 v/v. The data are summarized in Table XXIV below.

TABLE XXIV

PERCENT VANADIUM EXTRACTED

| Treatment | Extraction Time, hrs. | | | | | | | | |
|---|---|---|---|---|---|---|---|---|---|
| | 3 | 5 | 10 | 15 | 20 | 25 | 30 | 35 | 40 |
| Presulfided + MPA + H$_2$O$_2$ | 20 | 27 | 45 | 57 | 66 | 74 | 80 | 90 | 95 |

Example 16

Effect of Presulfiding Temperature on Vanadium Extraction from Crushed Catalyst.

The experiment given in Example 15 was repeated, employing presulfiding temperatures of 500°C for 1 hour and 600°C for 1 hour. The data on the percent vanadium extracted are summarized in Table XXV below.

TABLE XXV

PERCENT VANADIUM EXTRACTED

| Presulfide Treatment | Extraction Time, hrs. | | | | | | |
|---|---|---|---|---|---|---|---|
| | 2 | 4 | 6 | 8 | 10 | 12 | 16 |
| 500°C, 1 hr. | 21 | 39 | 54 | 75 | 87 | 90 | 95 |
| 600°C, 1 hr. | 29 | 54 | 65 | 77 | 87 | 92 | 97 |

18

These data suggest that presulfiding treatments of shorter duration are adequate to convert to an extractable sulfide.

## Example 17

X-Ray Crystallite Size Measurement

Samples of small pore 1/16 inch extrudate and 20 to 40 mesh size particles of Co—Mo/$Al_2O_3$ spent hydrotreating catalyst used for hydrodesulfurization were subjected to treatments of varying temperatures and duration with a 100% $H_2S$ gas (1 atm) at a velocity of 10 liters/hr. The catalyst was cooled to room temperature under a stream of inert gas such as oxygen-free nitrogen or argon. The $Al_2O_3$ crystallite size was determined by X-ray diffraction. The results are summarized in Table XXVI below.

### TABLE XXVI

| | $Al_2O_3$ Crystalline Size, A |
| --- | --- |
| Spent Catalyst, solvent extracted | 41 |
| Presulfided at 400°C—4 hrs (pellet) | 44 |
| Presulfided at 500°C—4 hrs (pellet) | 46 |
| Presulfided at 500°C—1 hr (20—40 mesh) | 43 |
| Presulfided at 600°C—1 hr (20—40 mesh) | 43 |

From Table XXVI, it is clear that presulfiding the spent catalyst, whether 1/16 inch pellets or 20 to 40 mesh size particles, at the conditions listed does not substantially alter the $Al_2O_3$ crystallite size. This indicates that the structural integrity of the support is essentially preserved.

## Claims

1. A process for regenerating a spent hydrofining catalyst which comprises contacting the spent catalyst with an aqueous solution of a heteropoly acid having the general formula $H_x(YM_{12}O_{40})$ where Y is at least one element selected from phosphorus, silicon, titanium, germanium, arsenic, zirconium, thorium and cerium; M is at least one element selected from molybdenum, tungsten, niobium and tantalum and x is 3 when Y is pentavalent and 4 when Y is tetravalent, followed by impregnating the treated catalyst with a water-soluble cobalt or nickel salt and followed by calcination in air at maximum temperature of about 450°C.

2. A process according to claim 1 in which said impregnation and calcination are repeated at least once.

3. A process according to either of claims 1 and 2 in which the hydrofining catalyst comprises a cobalt-molybdenum-loaded alumina support.

4. A process for removing metal contaminants comprising vanadium, nickel or a mixture thereof from a catalyst comprising one or more catalytic metals supported on an alumina support, said process comprising contacting said metal-contaminated catalyst with an aqueous solution of a heteropoly acid having the general formula $H_x(YM_{12}O_{40})$ where Y is at least one element selected from phosphorus, silicon, titanium, germanium, arsenic, zirconium, thorium and cerium; M is at least one element selected from molybdenum, tungsten, niobium and tantalum and x is 3 when Y is pentavalent and 4 when y is tetravalent.

5. A process according to any one of the preceding claims wherein the catalyst is first contacted with a gaseous, sulphur-containing reagent having or providing a partial pressure of sulphur of at least 0.01 atmospheres at a temperature of up to 650°C before being contacted with said aqueous solution.

6. A process according to any one of claims 1 to 4 wherein the aqueous solution of the heteropoly acid also contains up to 50 wt.% hydrogen peroxide based on the amount of heteropoly acid.

7. A process according to claim 6 in which the concentration of hydrogen peroxide is at least 1 wt.%.

8. A process according to claim 7 in which the concentration of hydrogen peroxide is in the range of from 3 to 15 cwt.%.

9. A process according to any one of claims 6 to 8 in which the spent catalyst is contacted by the heteropoly acid/hydrogen peroxide solution for a period of time of from 4 to 200 hours.

10. A process according to any one of the preceding claims in which Y is phosphorus and M is molybdenum.

11. A process according to claim 9 in which up to one-half of M is replaced by at least one element selected from nickel, cobalt and vanadium.

12. A process according to any one of the preceding claims in which the spent catalyst is contacted with the heteropoly acid solution at a temperature of between ambient and 80°C.

13. A process according to any one of the preceding claims in which the concentration of the heteropoly acid in solution is in the range of from 0.1 to 25 wt.%.

14. A process according to claim 13 in which said solution has a pH in the range of from 1 to 3.

## Revendications

1. Procédé pour la régénération d'un catalyseur d' "hydrofining" usé, caractérisé en ce qu'il comprend la mise en contact du catalyseur usé avec une solution aquese d'un hétéropolyacide de formule générale $H_x(YM_{12}O_{40})$ où Y est au moins un élément choisi parmi le phosphore, le silicium, le titane, le germanium, l'arsenic, le zirconium, le thorium et le cérium; M est au moins un élément choisi parmi le molybdène, le tungstène, le niobium et le tantale et x est 3 lorsque Y est pentavalent et 4 lorsque Y est tétravalent, suivie d'une imprégnation du catalyseur traité avec un sel de cobalt ou de nickel soluble dans l'eau et suivie d'une calcination à l'air à une température maximale d'environ 450°C.

2. Procédé selon la revendication 1, caractérisé en ce que lesdites imprégnation et calcination sont répétées au moins une fois.

3. Procédé selon l'une des revendications 1 ou 2, caractérisé en ce que le catalyseur d' "hydrofining" comprend un support d'alumine chargé de cobalt-molybdène.

4. Procédé pour l'élimination des produits de contamination métalliques comprenant du vanadium, du nickel ou un mélange de ceux-ci à partir d'un catalyseur comportant un ou plusieurs métaux catalytiques sur support d'alumine, cractérisé en ce qu'il comprend la mise en contact du catalyseur contaminé par des métaus avec une solution aqueuse d'un hétéropolyacide de formule générale $H_x(YM_{12}O_{40})$ où Y est au moins un élément choisi parmi le phosphore, le silicium, le titane, le germanium, l'arsenic, le zirconium, le thorium et le cérium; M est au moins un élément choisi parmi le molybdène, le tungstène, le niobium et le tantale, et x est 3 lorsque Y est pentavalent et 4 lorsque Y est tétravalent.

5. Procédé selon l'une quelconque des revendication 1 à 4, caractérisé en ce que le catalyseur est d'abord mis en contact avec un réactif gazeux, contenant du soufre, possédant ou fournissant une pression partielle de soufre d'au moins 0,01 atmosphère à une température allant jusqu'à 650°C avant la mise en contact avec ladite solution aqueuse.

6. Procédé selon l'une quelconque des revendications 1 à 4, caractérisé en ce que la solution aqueuse de l'hétéropolyacide contient également jusqu'à 50% en poids de peroxyde d'hydrogène par rapport à la quantité d'hétéropolyacide.

7. Procédé selon la revendication 6, caractérisé en ce que la concentration de peroxyde d'hydrogène est d'au moins 1% en poids.

8. Procédé selon la revendication 7, caractérisé en ce que la concentration de peroxyde d'hydrogène se situe entre 3 et 15% en poids.

9. Procédé selon l'une quelconque des revendications 6 à 8, caractérisé en ce que le catalyseur usé est mis en contact avec la solution d'hétéropolyacide/peroxyde d'hydrogène pendant une période de 4 à 200 heures.

10. Procédé selon l'une quelconque des revendications 1 à 9, caractérisé en ce que Y est du phosphore et M est du molybdène.

11. Procédé selon la revendication 10, caractérisé en ce que jusqu'à la moitié de M est remplacée par au moins un élément choisi parmi le nickel, le cobalt et le vanadium.

12. Procédé selon l'une quelconque des revendications 1 à 11, caractérisé en ce que le catalyseur usé est mis en contact avec la solution d'hétéropolyacide à une température comprise entre l'ambiante et 80°C.

13. Procédé selon l'une quelconque des revendications 1 à 12, caractérisé en ce que la concentration de l'hétéropolyacide en solution est comprise entre 0,1 et 25% en poids.

14. Procédé selon la revendication 13, caractérisé en ce que ladite solution possède un pH se situant entre 1 et 3.

## Patentansprüche

1. Verfahren zur Regenerierung eines verbrauchten Hydrofiningkatalysators, dadurch gekennzeichnet, daß der verbrauchte Katalysator mit einer wässrigen Lösung einer Heteropolysäure mit der allgemeinen Formel $Hx(YM_{12}O_{40})$, in der Y mindestens eine Element ausgewählt aus der Gruppe bestehend aus Phosphor, Silicium, Titan, Germanium, Arsen, Zirkon, Thorium und Cer ist, M mindestens ein Element ausgewählt aus der Gruppe bestehend aus Molybdän, Wolfram, Niob und Tantal ist und x 3 ist, wenn Y 5-wertig ist, und 4 ist, wenn Y 4-wertig ist, kontaktiert wird, anschließend der behandelte Katalysator mit einem wasserlöslichen Kobalt-oder Nickelsalz impragniert und dann bei einer maximalen Temperatur von etwa 450°C an der Luft calciniert wird.

2. Verfahren nach Anspruch 1, dadurch gekennzeichnet, daß das Imprägnieren und Calcinieren mindestens einmal wiederholt wird.

3. Verfahren nach Anspruch 1 oder 2, dadurch gekennzeichnet, daß der Hydrofiningkatalysator einen Kobalt-Molybdänbeladenen Aluminiumoxidträger enthält.

4. Verfahren zur Entfernung von Vanadin, Nickel oder eine Mischung derselben umfassenden Metallverunreinigungen von einem Katalysator, der ein oder mehrere katalytische Metalle aufgebracht auf einem Aluminiumoxidträger enthält, dadurch gekennzeichnet, daß der metallverunreinigte Katalysator mit einer wässrigen Lösung einer Heteropolysäure mit der allgemeinen Formel $Hx(YM_{12}O_{40})$, in der Y mindestens eine Element ausgewählt aus der Gruppe bestehend aus Phosphor, Silicium, Titan, Germanium, Arsen, Zirkon, Thorium und Cer ist, M mindestens ein Element ausgewählt aus der Gruppe bestehend aus Molybdän, Wolfram, Niob und Tantal und x 3 ist, wenn Y 5-wertig ist, und 4 ist, wenn Y 4-wertig ist, kontaktiert wird.

5. Verfahren nach jedem der vorangegangenen Ansprüche, dadurch gekennzeichnet, daß der Katalysator vor dem Kontaktieren mit der wässrigen Lösung zuerst mit einem gasförmigen, Schwefel enthaltenden Reagenz kontaktiert wird, das bei einer Temperatur von bis zu 650°C einen Schwefelpartialdruck von mindestens 0,01 Atmosphären aufweist oder liefert.

6. Verfahren nach jedem der Ansprüche 1 bis 4, dadurch gekennzeichnet, daß die wässrige Lösung der Heteropolysäure bezogen auf die Menge der Heteropolysäure außerdem bis zu 50 Gew.% Wasserstoffperoxid enthält.

7. Verfahren nach Anspruch 6, dadurch gekennzeichnet, daß die Konzentration an Wasserstoffperoxid mindestens 1 Gew.% beträgt.

8. Verfahren nach Anspruch 7, dadurch gekennzeichnet, daß die Konzentration an Wasserstoffperoxid 3 bis 15 Gew% beträgt.

9. Verfahren nach jedem der Ansprüche 6 bis 8, dadurch gekennzeichnet, daß der verbrauchte Katalysator 4 bis 200 Stunden mit der Heteropolysäure/Wasserstoffperoxid-Lösung kontaktiert wird.

10. Verfahren nach jedem der vorangegangenen Ansprüche, dadurch gekennzeichnet, daß Y Phosphor und M Molybdän ist.

11. Verfahren nach Anspruch 10, dadurch gekennzeichnet, daß bis zur Hälfte von M durch mindestens ein Element ausgewählt aus der Gruppe bestehend aus Nickel, Kobalt und Vanadin ersetzt ist.

12. Verfahren nach jedem der vorangegangenen Ansprüche, dadurch gekennzeichnet, daß der verbrauchte Katalysator mit der Heteropolysäurelösung bei einer Temperatur zwischen Umgebungstemperatur und 80°C kontaktiert wird.

13. Verfahren nach jedem der vorangegangenen Ansprüche, dadurch gekennzeichnet, daß die Konzentration der Heteropolysäure in Lösung 0,1 bis 25 Gew.% beträgt.

14. Verfahren nach Anspruch 13, dadurch gekennzeichnet, daß die Lösung einen pH-Wert im Bereich von 1 bis 3 besitzt.